# EUROPÄISCHE PATENTSCHRIFT

(11) **EP 1 348 495 B1**
(45) Veröffentlichungstag und Bekanntmachung des Hinweises auf die Patenterteilung: **21.07.2010**
(21) Anmeldenummer: 03007072.6
(22) Anmeldetag: 27.03.2003
(51) Int. Cl.: B07B 13/18, B07B 1/18, B07B 1/46

(54) **Siebvorrichtung mit aufeinandergepressten Siebelementen**
Screen with pressed together screening elements
Tamis avec éléments de tamisage pressés l'un contre l'autre

(30) Priorität: 28.03.2002 DE 10214326; 27.09.2002 DE 10245447
(43) Veröffentlichungstag der Anmeldung: 01.10.2003
(73) Patentinhaber: Huning Umwelttechnik GmbH + Co. KG, 49326 Melle (DE)
(72) Erfinder: Huning, Walter, 49326 Melle (DE)
(74) Vertreter: Engelmann, Kristiana

(56) Entgegenhaltungen:
- DE-A- 4 027 111
- DE-A- 19 807 145
- DE-C- 205 518
- US-A- 121 192
- US-A- 2 315 651
- US-A- 2 642 993

## Beschreibung

Die Erfindung betrifft eine Siebvorrichtung mit wenigstens zwei mit ihren Oberflächen gegeneinander verschiebbar aufeinanderliegenden Siebelementen nach dem Oberbegriff des Anspruchs 1.

Derartige Siebvorrichtungen, bei denen die Sieblöcher der einzelnen Siebelemente abhängig von der relativen Lage der Siebelemente zueinander gemeinsame Sieböffnungen ausbilden, werden als sogenannte Verstellsiebe zum Erzielen unterschiedlicher Fraktionierungen beim Sieben bzw. zum Erreichen verschiedener Feinheiten des gesiebten Gutes eingesetzt.

Eine gattungsgemäße Siebvorrichtung ist aus der DE 40 27 111 A1 bekannt. Versuche mit einer derartigen Siebvorrichtung haben ergeben, daß sich im Einsatz Siebgut zwischen die aufeinanderliegenden Oberflächen der Siebelemente schiebt, Ausbeulungen verursacht und dadurch eine Verstellbarkeit des Siebes blockieren kann, zu schlechten Siebergebnissen führt oder die Siebvorrichtung sogar erheblich beschädigt wird.

Die DE 27 20 173 C2 beschreibt eine andere Art von Siebvorrichtungen, bei der zwei aus Drähten gewobene Maschensiebe um eine halbe Maschenweite gegeneinander versetzt aufeinandergelegt und in dieser Position als doppellagiges Vibrationssieb fixiert werden. Durch die Vibrationsbewegung während der Siebung entfernen sich die Siebelemente ständig voneinander und berühren sich dann wieder. Diese Relativbewegung soll verhindern, daß sich Partikel zwischen den Drähten der einzelnen Siebelemente festsetzen. In der Praxis sind dem Einsatz derartiger Siebvorrichtungen jedoch enge Grenzen gesetzt. Durch die Verwendung der Maschensiebe können die gewünschten Fraktionierungen nur mit einer breiten Streuung erhalten werden. Eine Verstellung der Siebvorrichtung zum Erhalt verschieden großer Sieböffnungen ist weder vorgesehen noch möglich. Zudem trifft die geringe Verstopfungsneigung der Siebvorrichtung nur für im wesentlichen körniges Siebgut zu. Sollen hingegen auch Bestandteile ausgesiebt werden, deren Erstreckung in einer Dimension wesentlich größer als in einer anderen ist, beispielsweise Halmgut, Fäden, Plastikstreifen etc., verfangen sich diese Bestandteile häufig zwischen den Maschen der einzelnen Siebelemente und führen dort zu einer Verbeulung und Verformung des Siebes bis hin zur völligen Blockierung der Siebleistung.

Die US 2,642,993 zeigt eine Siebvorrichtung, bei der zwei unterschiedliche Siebelemente durch Niete aneinander gedrückt gehalten werden. Damit wird zwar bereits teilweise das Eindringen von Siebgut in dem Zwischenraum zwischen den beiden Sieben verhindert, jedoch wird die wie einmal gewählt feste und nicht änderbare Fixierung durch Niete unterschiedlichen Siebbedingungen oft nicht gerecht. Auch tritt an den Nieten häufig ein gewisser Verschleiß auf, wodurch dann doch der Spalt zwischen den Siebelementen zu groß wird.

In der US 668,737 ist ein Sieb für Dreschmaschinen beschrieben, bei dem die Fixierung zweier Siebelemente gegeneinander nicht durch Niete, sondern über Schrauben und Flügelmuttern erfolgt. Dies ermöglicht ein Nachstellen von Hand, falls Verschleiß erfolgt ist. Allerdings muss ein solcher Nachstellvorgang aktiv von dem Nutzer vorgenommen werden. Der Nutzer muss daher regelmäßig überprüfen, ob die Spannung an den Verschraubungen noch ausreichend ist.

Die Erfindung befasst sich daher mit dem Problem, eine gattungsgemäße verstellbare Siebvorrichtung zu schaffen, die die vorgenannten Probleme vermeidet und auch bei längerer Betriebsdauer eine einwandfreie Funktion der Siebvorrichtung bei geringem Wartungsaufwand gewährleistet.

Erfindungsgemäß wird dieses Problem durch eine Siebvorrichtung mit den Merkmalen des Anspruchs 1 gelöst.

Durch die Verwendung eines, vorzugsweise aber mehrerer Spannelemente mit variabel einstellbarem Anpressdruck über ein im wesentlichen starres Befestigungselement und einen elektrischen Presskörper zum spaltfreien Aufeinanderpressen der einander zugewandten Oberflächen der Siebelemente wird verhindert, dass sich zu siebendes Gut oder Fremdkörper zwischen die Siebelemente setzen und diese verformen, verbiegen oder verstopfen. Diese Funktion wird durch den variabel einstellbaren und über den elastischen Presskörper auch im Gebrauch aufrechterhaltenen Anpressdruck auch bei Unterschieden in dem zu siebenden Gut oder den Siebbedingungen, Vibrationsgeschwindigkeit oder dergleichen, sichergestellt. Auch kann der Anpressdruck wieder angeglichen werden, wenn er sich beispielsweise durch die Siebbewegungen oder Verschleiß an den Siebelementen herabgesetzt hat. Obschon bei dem erfindungsgemäßen Sieb keine Fremdkörper mehr zwischen die Siebelemente eindringen können, kann es insbesondere bei feuchtem oder klebrigem Siebgut dazu kommen, dass sich die von den Sieblöchem gebildeten Öffnungen zusetzen. Dies lässt sich bei dem erfindungsgemäßen Sieb leicht durch eine Hubbewegung mit Verschiebung der Siebelemente gegeneinander beheben, wodurch eine automatische Reinigung eintritt. Dabei werden die Kanten von übereinander liegenden Sieblöchem scherenartig gegeneinander bewegt, wodurch Fremdkörper, die im Bereich der Sieblöcher festsitzen, erfasst, geschnitten und abgeschert werden. Auch können die Siebelemente aus der gewählten Position so gegeneinander verschoben werden, dass ihre Sieblöcher so übereinander liegen, dass eine maximale Öffnungsfläche freigegeben wird, Eventuell verklemmtes Siebgut kann dann durch die so gebildeten vergrößerten Öffnungen hindurch fallen. Diese Offnungsbewegungen können wegen der erfindungsgemäßen Aufeinanderpressung der Siebelemente nicht dazu führen, dass Fremdkörper zwischen die Siebelemente geraten.

Die beiden genannten Reinigungsbewegungen können bevorzugt in Kombination erfolgen. Werden diese Impulsartig schnell durchgeführt, wird das Siebergebnis dadurch nahezu nicht beeinträchtigt. Eine derartige Reinigung der Siebvorrichtung kann insoweit sogar während des Siebvorgangs erfolgen.

Die Selbstreinigungswirkung der Siebvorrichtung aber auch das Siebergebnis wird noch verbessert, wenn die Sieblöcher in ihrem Übergangsbereich zu der Oberfläche des benachbarten Siebelementes scharfkantig ausgebildet sind. Vorzugsweise sollten die Lochwandungen der Sieblöcher dazu senkrecht zur Oberfläche des Siebelements sein. Diese Ausbildung verbessert auch das spaltfreie Aufeinanderliegen der Oberflächen der Siebelemente und verringert die Wartungsanfälligkeit noch weiter.

Die Siebvorrichtung kann auch mit einer Sensorik ausgestattet sein, die eine Verschiebung der Siebelemente gegeneinander in Abhängigkeit von am gesiebten oder zu siebenden Gut gemessenen Werten steuert. Dadurch kann die Siebleistung stets optimal den Randbedingungen angepaßt werden.

Eine derartige Sensorik kann auch zur Optimierung der Reinigung der Siebvorrichtung eingesetzt werden, beispielsweise über eine integrierte Ermittlung des Verschmutzungsgrades. Hierzu kommen nicht nur optische Sensoren in Frage, sondern es kann beispielsweise auch die Höhe des auf dem Sieb aufliegenden zu siebenden Guts ermittelt werden. Übersteigt diese einen vorgegebenen Wert, läßt das auf eine Verstopfung des Siebes schließen. Alternativ ist auch beispielsweise eine Messung der Menge des auch dem Sieb heraustretenden gesiebten Gutes möglich. Geht die gesiebte Menge pro Zeit zurück, liegt ebenfalls eine Verschmutzung des Siebes vor.

Die Siebreinigung kann auch unabhängig von einer eventuell ermittelten Verschmutzung des Siebes, beispielsweise in definierten Zeitabständen durchgeführt werden. Der Abstand zwischen zwei Reinigungsvorgängen kann dabei wiederum in Abhängigkeit vorgenommener Messungen gesteuert sein. Erfolgt beispielsweise eine Feuchtemessung des zu siebenden Gutes, kann eine häufige Reinigung bei besonders feuchtem Gut sinnvoll sein, da dieses mehr dazu neigt, die Siebe zu verstopfen. Dies gilt ebenso für ölhaltige oder klebrige Medien.

Selbstverständlich können mehrere erfindungsgemäße Siebvorrichtungen zu einer größeren Einheit kombiniert werden.

Die erfindungsgemäßen Siebvorrichtungen eignen sich sowohl zum herkömmlichen Sieben als auch zu mahlender Be- oder Verarbeitung von Material wie beispielsweise in Steinbrüchen.

Neben im wesentlichen ebenen Siebelementen können diese auch andere geometrische Formen annehmen. Insbesondere sind Trommelsiebe mit zylindrischen Siebelementen erfindungsgemäß auszustatten.

Auch haubenartige konische Siebvorrichtungen lassen sich vielfältig einsetzen, beispielsweise über Abflüssen von Schmutzwasserbassins, Güllebecken oder dergleichen. Gerade derartige Siebe setzen sich häufig mit Fremdkörpern zu. Andererseits ist ein Siebwechsel in diesen Anwendungspositionen oft nur schwer möglich. Hier können die erfindungsgemäßen Siebe Abhilfe schaffen, da diese durch eine Verschiebebewegung der Siebelemente gegeneinander gereinigt werden können, ohne daß Gefahr besteht, daß Partikel zwischen die Siebelemente gelangen.

Weitere Vorteile und Einzelheiten ergeben sich aus den Unteransprüchen und in den Zeichnungen dargestellten Ausführungsbeispielen der Erfindung, die im folgenden beschrieben werden; es zeigen:
- Fig. 1:: eine schematische Draufsicht einer Siebvorrichtung,
- Fig. 2:: einen Schnitt in Richtung II-II durch den Gegenstand in Fig. 1,
- Fig. 3:: eine Detailvergrößerung aus Fig. 2,
- Fig. 4:: eine Draufsicht auf ein weiteres Siebelement,
- Fig. 5:: ein Spannelement,
- Fig. 6:: eine Siebvorrichtung mit einem Siebelement aus Fig. 4,
- Fig. 7:: eine andere Siebvorrichtung in Draufsicht,
- Fig. 8:: einen Schnitt durch eine weitere Siebvorrichtung,
- Fig. 9:: einen schematischen Schnitt durch eine andere Siebvorrichtung,
- Fig. 10:: einen Schnitt durch ein Trommelsieb,
- Fig. 11:: eine Abwicklung der Siebelemente des Gegenstands aus Fig. 10,
- Fig. 12:: eine weitere Siebvorrichtung,
- Fig. 13:: die Spannvorrichtung der Siebvorrichtung aus Fig. 12 und
- Fig. 14 bis 21:: verschiedene Siebvorrichtungen mit unterschiedlichen Sieblö- chern und Verstellpositionen.

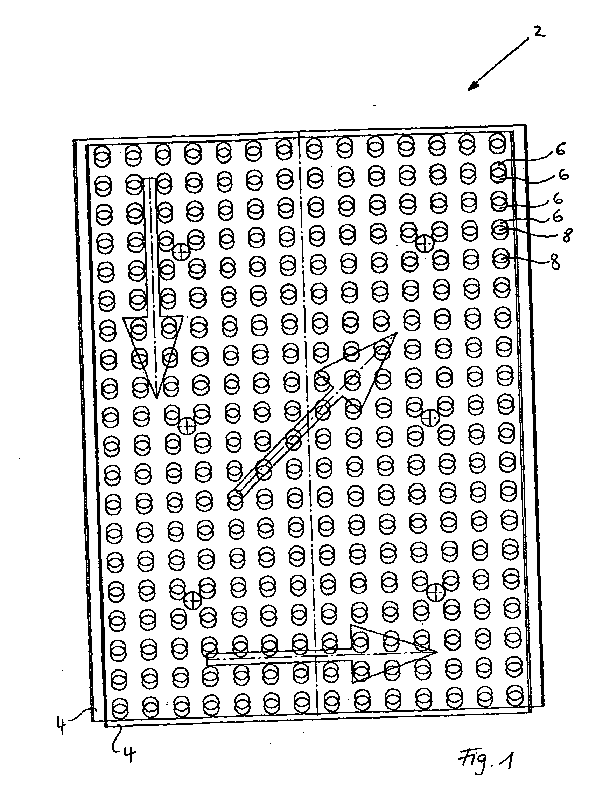

In Fig. 1 ist eine Siebvorrichtung 2 gezeigt, die aus zwei aufeinanderliegenden Siebelementen 4 gebildet ist. Jedes Siebelement 4 weist eine Anzahl von Sieblöchem 6 auf. Jeweils übereinanderliegende Sieblöcher 6 der aufeinanderliegenden Siebelemente 4 bilden gemeinsam eine Sieböffnung 8. Bei einer Veränderung der relativen Lage der Siebelemente 4 zueinander, vorzugsweise in Richtung der dargestellten Pfeile, verändert sich die Größe der gemeinsamen Sieböffnungen 8. Während ein einzelnes Siebloch 6 ganz oder teilweise von einem anderen Siebelement 4 abgedeckt sein kann, ist als Sieböffnung 8 eine Öffnung bezeichnet, die es dem Siebgut gestattet, sich bei passender Partikelgröße vollständig durch die aufeinanderliegenden Siebelemente 4 hindurch zu bewegen. Eine einzelne Sieböffnung 8 ist von anderen Sieböffnungen 8 abgegrenzt und getrennt.

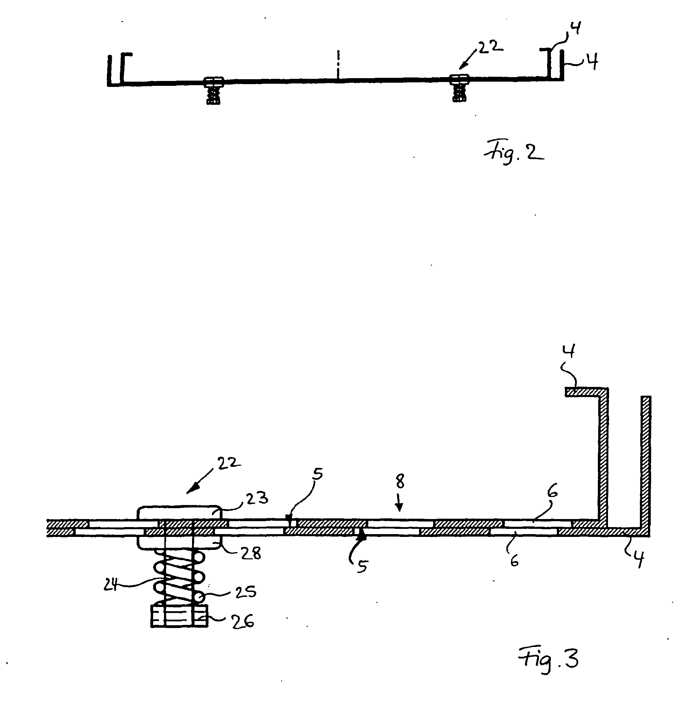

Die Fig. 2 und 3 zeigen, dass die Siebelemente 4 mit ihren Oberflächen 5 plan- und spaltfrei aufeinanderliegen, wozu sie von Spannelementen 22 aufeinandergedrückt werden. In einfacher Bauform bestehen die Spannelemente 22 aus einem starren Befestigungselement, beispielsweise einem Bolzen 24, der von einem elastischen Presskörper, beispielsweise einer Feder 25 vorgespannt ist. Die Bolzen 24 erstrecken sich durch nicht dargestellte Ausnehmungen der Siebelemente 4 hindurch, die so groß sein müssen, daß sie eine Verschiebebewegung der Siebelemente 4 gegeneinander zulassen. Der oberseitige Bolzenkopf 23 des Bolzens 24 und eine als Widerlager für die Feder 25 dienende Unterlegscheibe 28 sind dabei größer als die Ausnehmungen ausgebildet. Die Unterlegscheibe 28 dient auch der Vergrößerung der Auflagefläche und zur Verteilung des Anpreßdrucks. Die Feder 25 kann so stark ausgelegt sein, daß sie die Siebelemente 4 aneinander festlegt und nicht nur ein Abheben voneinander, sondern auch eine Verschiebung gegeneinander unterbindet. Die Spannelemente 22 dienen dann ebenfalls der Fixierung der gewählten Siebpositionen. Zur Verstellung der Siebelemente 4 gegeneinander muß dann die Federspannung gelöst werden, bevor die Siebelemente 4 gegeneinander verschoben werden können.

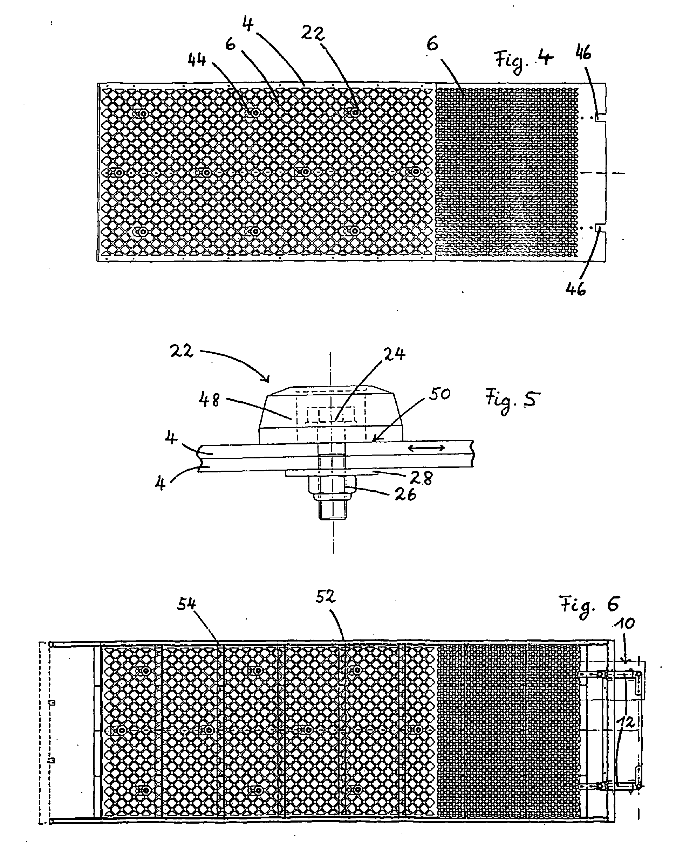

In Fig. 4 ist ein einzelnes Siebelement 4 aus einer Sicht von oben dargestellt. Das Siebelement 4 weist in einem Bereich kleinere Sieblöcher 6 und in einem anderen Bereich größere Sieblöcher 6 auf. Über die Siebfläche des Siebelementes 4 ist eine Mehrzahl von Spannelementen 22 so verteilt, daß diese über die Länge und Breite des Siebelementes 4 eine Anpreßkraft zum Andrücken eines weiteren Siebelementes 4 erzeugen können. Im Siebelement 4 sind Langlöcher 44 angeordnet, durch die das Siebelement 4 während eines Verstellvorganges geführt ist. Das Siebelement 4 weist Ausnehmungen 46 auf, an denen eine Verstelleinrichtung 10 befestigt werden kann. Das in Fig. 4 gezeigte Siebelement 4 ist so ausgebildet, daß dieses nur im Bereich der größeren Sieblöcher 6 auf einem zweiten Siebelement 4 aufliegt.

In Fig. 5 ist ein Spannelement 22 in einer vergrößerten Ansicht zu sehen. Zwei aufeinanderliegende Siebelemente 4 sind vom Spannelement 22 aufeinandergepreßt. Das Spannelement 22 besteht aus einem Schraubbolzen 24, der mit einer Schraubmutter 26 verschraubt ist. Der Anpreßdruck kann durch ein unterschiedliches Anzugsmoment der Schraubmutter 26 variiert werden. Die Schraubmutter 26 kann auf ein Ausgangs-Anzugsmoment eingestellt werden. Nach vielfacher Verstellung der Siebvorrichtung 2 kann es erforderlich sein, das Anzugsmoment der Schraubmutter 26 nachzujustieren. Auch ist es denkbar, daß sich die Siebe aufeinander festgesetzt haben. In dem Fall ist es von Vorteil, die Schraubmutter 26 zu lösen, um die Siebelemente 4 leicht verstellen zu können. Wenn die Siebelemente 4 aus Edelstahl hergestellt sind, kann ein Festrosten der Siebelemente 4 aneinander vermieden werden.

Der Schraubbolzen 24 ist in einem bei dem Ausführungsbeispiel als Hartgummipuffer 48 ausgebildeten Preßkörper gelagert, der vom Schraubkopf 23 des Schraubbolzens 24 mit seiner Unterseite auf ein Siebelement 4 gedrückt wird. Die Auflagefläche 50 des Gummipuffers 48 ist somit fest auf die Oberfläche des zugehörigen Siebelementes 4 gepreßt. Die Preßkörper können auch beispielsweise aus Kunststoff bestehen oder auch als andere flexible Elemente wie Tellerfedern, Spiralfedern oder dergleichen ausgebildet sein. Insbesondere bei einem verschleißintensiven Einsatz und Siebungen harter Materialien wie z.B. im Steinbruch sind Gummipuffer 48 jedoch besonders vorteilhaft, da sie vom zu siebenden Material nicht beschädigt werden.

Für eine Verstellung des oberen Siebelements 4 in Pfeilrichtung müssen zunächst die Reibschlußkräfte überwunden werden, die von der Auflagefläche 50 des Gummipuffers 48, aber auch aus der Reibung der aufeinanderliegenden Flächen 5 der Siebelemente 4 resultieren. Wird der Anpreßdruck zum Aufeinanderpressen der Siebelemente 4 durch eine entsprechende Anspannung der Spannelemente 22 ausreichend hoch gewählt, so ist eine ungewollte Veränderung der relativen Lage der Siebelemente 4 zueinander während des ordnungsgemäßen Betriebes der Siebvorrichtung 2 ausgeschlossen. Eine Verstellung der Siebvorrichtung 2 kann dann nur erfolgen, wenn die aufgebrachte Verstellkraft größer ist als die der Verstellung entgegenwirkende Reibschlußkraft. Die der Oberfläche des zugehörigen Siebelementes 4 zugewandte Auflagefläche 50 des Gummipuffers 48 sollte einen Reibungskoeffizienten aufweisen, der ausreicht, um das verstellbare Siebelement 4 während des Normalbetriebs in einer eingestellten Position zu halten. Zudem muß der Anpreßdruck vom Preßkörper so auf die Fläche eines Siebelementes 4 verteilt werden, daß dieses keine Hohlräume mit dem darunterliegenden Siebelement 4 ausbilden kann, in dem sich Fremdkörper ansammeln, die zu einer Funktionsbeeinträchtigung und schließlich sogar Zerstörung der Siebvorrichtung 2 führen können. Die Spann elemente 22 können dazu je nach Siebgröße im inneren Bereich der Siebelemente 4 und/oder an ihren Außenkanten angreifen.

In Fig. 6 ist das in Fig. 4 dargestellte Siebelement 4 in einen Rahmen 52 eingebaut. Der Rahmen 52 umfaßt das Siebelement 4 an seinem Außenumfang. Die Längsträger des Rahmens 52 sind in Querrichtung durch Versteifungsprofile 54 verstärkt. Die Siebvorrichtung 2 ist durch eine Verstelleinrichtung 10 verstellbar, die aus zwei Hubzylindern 12 besteht. Die beiden Hubzylinder 12 sind am Rahmen 52 befestigt. Die Hubzylinder 12 sind als Gleichlaufzylinder ausgebildet, um eine gleichmäßige Verstellbewegung sicherzustellen.

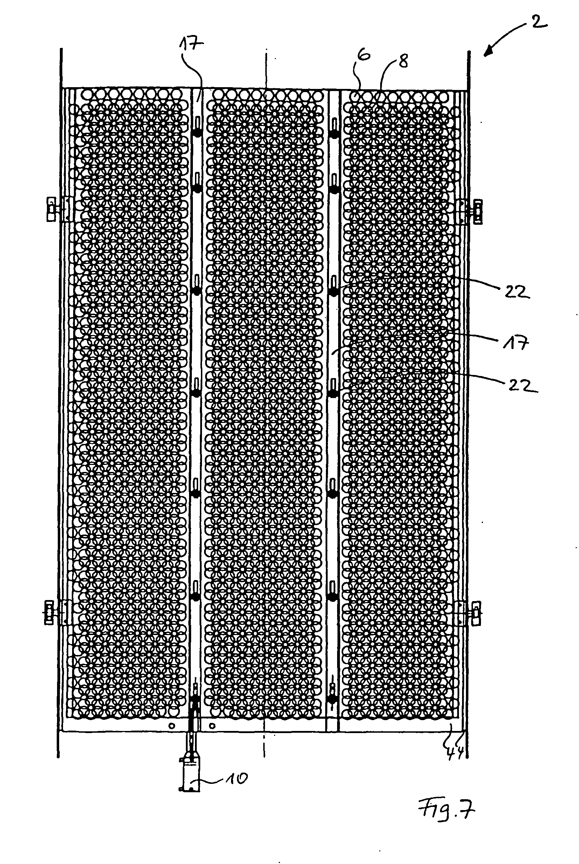

Fig. 7 zeigt eine Siebvorrichtung 2 in einer weiteren Ausführungsform. Dabei wirken die Spannelemente 22 über Andruckelemente 17 auf die Siebelemente 4 ein, wodurch der Anpreßdruck auf die Fläche verteilt und vergleichmäßigt wird. Eine gute Druckvergleichmäßigung wird insbesondere dann erreicht, wenn auf jedes Andruckelement 17 wie dargestellt mehrere Spannelemente 22, d.h. zumindest zwei, einwirken. Die Andruckelemente 17 weisen bei der dargestellten Ausführungsform Langlöcher auf, durch die sich die Spannelemente 22 hindurcherstrecken, um einer Verschiebebewegung der Siebelemente 4 folgen zu können. Die Andruckelemente 17 können verschiedene Geometrien aufweisen. Sie können sich beispielsweise senkrecht zur Zeichenebene in Fig. 7 nach oben erstrecken und dadurch Leitstege für das zu siebende Gut bilden. Auch können die Andruckelemente 17 eine Versteifung des Siebes bewirken, so daß dieses rahmenlos ausgebildet werden kann. Anstelle der in den Ausführungsbeispielen überwiegend dargestellten Schraubbolzen als Spannelemente können natürlich auch andere Verbindungstechniken wie Spannbügel, Hebelverschlüsse und dergleichen einsetzt werden.

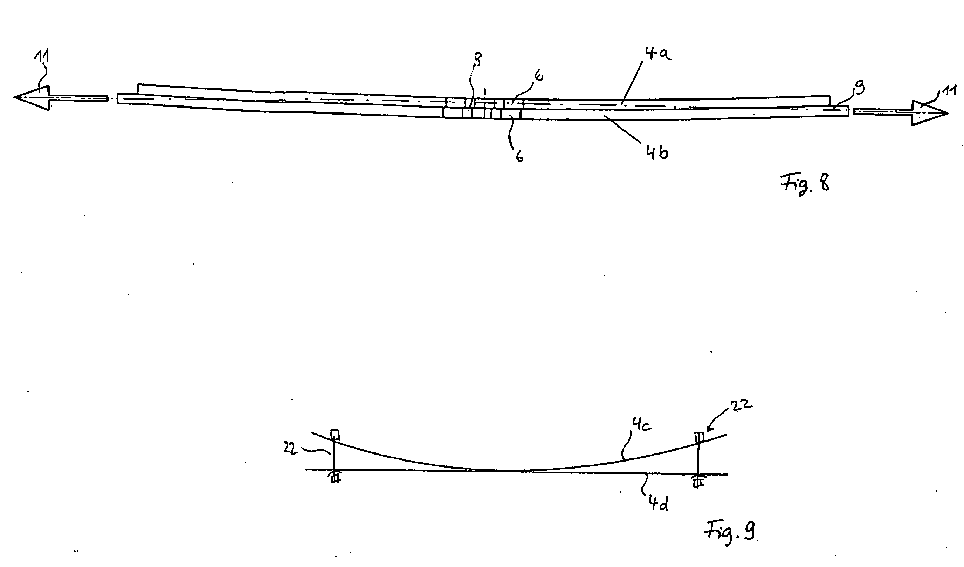

Die Pressung der Siebelemente 4 aufeinander kann auch dadurch bewirkt werden, daß ein Siebelement 4a gewölbt ausgebildet ist und das weitere Siebelement 4b über dieses herübergespannt ist. Dies ist in Fig. 8 dargestellt, wobei die strichpunktierte Linie 9 sich absolut eben durch die Mitte des Siebelementes 4a hindurcherstreckt und so dessen Wölbung demonstriert. Das zweite Siebelement 4b legt sich durch Vorspannung in Richtung der Pfeile 11 automatisch an das Siebelement 4a an.

Fig. 9 zeigt schematisch eine weitere Ausbildung einer Siebvorrichtung im Schnitt, wobei in diesem Fall eine Wölbung des oberen Siebelementes 4c zur Erzeugung einer Flächenpressung genutzt wird, indem dieses Siebelement 4c durch Spannelemente 22 auf das untere ebene Siebelement 4d gedrückt wird.

Das Siebelement 4d kann entgegen der Darstellung auch gegenläufig zu dem Siebelement 4c gewölbt ausgebildet sein.

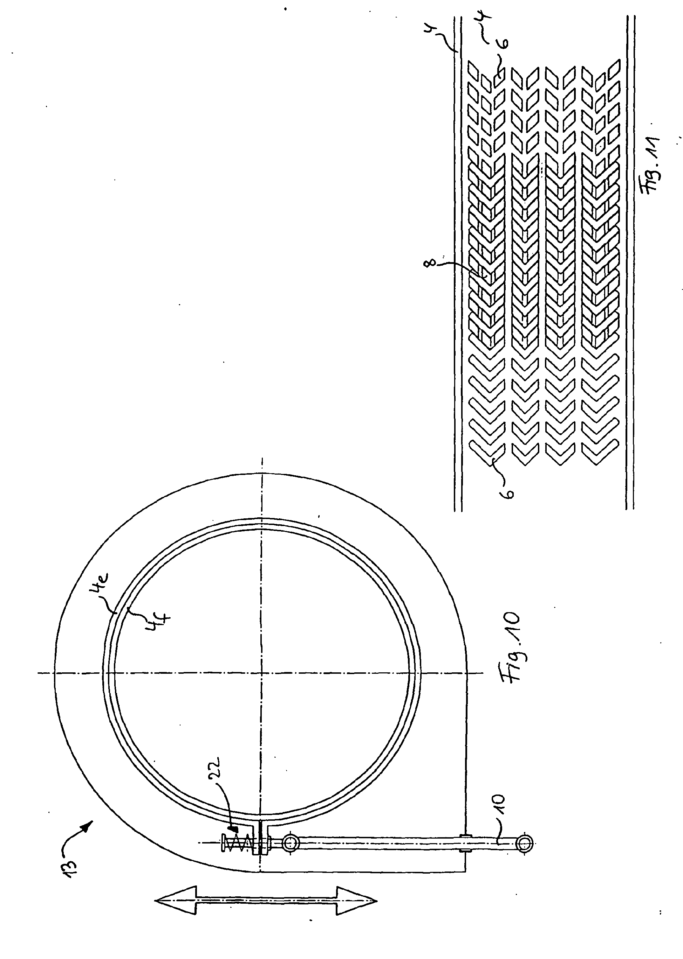

Fig. 10 zeigt eine Siebvorrichtung in Form eines Trommelsiebes 13, wobei das äußere Siebelement 4e über Spannelemente 22 um das innere Siebelement 4f herumgespannt ist. Eine Verstellung der Siebelemente 4 kann in Richtung des Pfeils durch die angedeutete Verstelleinrichtung 10 erfolgen. Auch eine Verschiebung gegeneinander in Achsrichtung ist jedoch möglich.

Fig. 11 zeigt eine Abwicklung der Siebelemente 4e und 4f mit speziell ausgestalteten Sieblöchern 6.

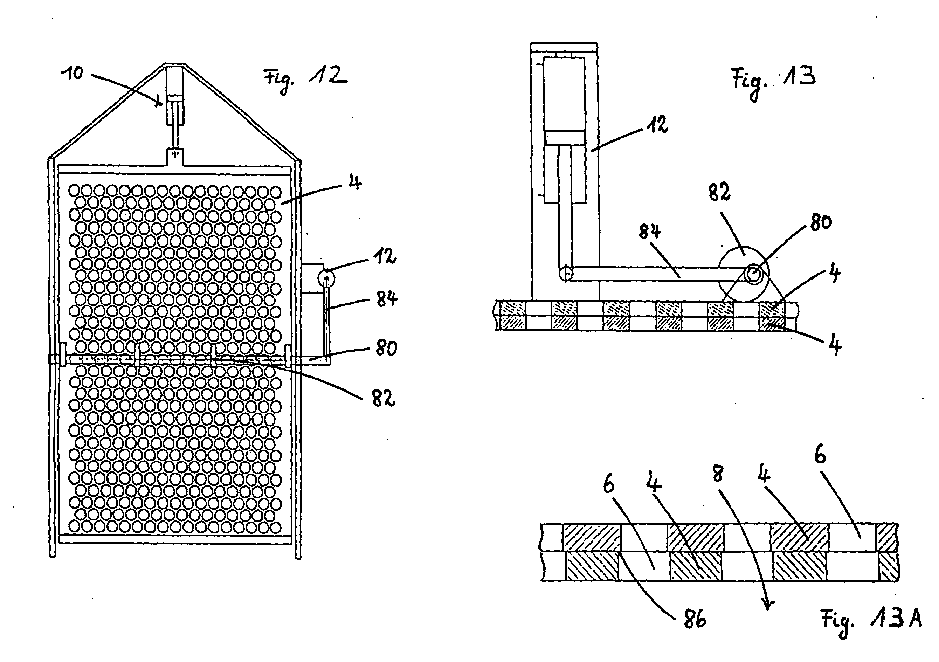

In Figur 12 ist eine Siebvorrichtung 2 aus einer Sicht von oben dargestellt. Als Spannelement 22 ist quer über ein Siebelement 4 verlaufend eine Welle 80 angeordnet, die Exzenter 82 aufweist. An der Welle 80 ist ein Exzenterhebel 84 befestigt, der von einem Hydraulikzylinder 12 betätigbar ist. Zur Verstellung des Siebs kann nun wie folgt vorgegangen werden: Der Hydraulikzylinder 12 dreht durch Betätigung die Exzenter 82 so, daß diese allenfalls unter geringem Anpreßdruck auf dem oberen Siebelement 4 aufliegen. Sodann kann das verstellbare Siebelement 4 in eine neue Sollposition verschoben werden durch die Betätigung der Verstelleinrichtung 10. Danach klemmt der Hydraulikzylinder 12 durch Betätigung des Exzenterhebels 84 die Exzenter 82 wieder fest. Bei einer funktionsmäßigen Kopplung der Betätigung der Verstelleinrichtung 10 mit der Betätigung des Exzenterhebels 84 - beispielsweise durch entsprechende Elektronik - kann die Verstellung der Sieböffnung sehr materialschonend vorgenommen werden, da die Verstellung nur unter allenfalls geringem Anpreßdruck der Spannelemente 22 erfolgt. Über den Hydraulikzylinder 12 ist mit einem Proportionalventil die Stellkraft und damit die Anpreßkraft der Exzenter 82 variabel einstellbar. Die beschriebene Siebklemmvorrichtung ist in Figur 13 in einer Seitenansicht dargestellt.

In Figur 13a ist ein Querschnitt durch aufeinanderliegende Siebelemente 4 gezeigt. Die Sieblöcher 6 sind dabei so ausgebildet, daß die Sieblöcher 6 des oberen Siebelements 4 kleiner sind als die Sieblöcher 6 des unteren Siebelements 4. Dadurch bildet sich am Übergang vom oberen Siebloch 6 zum unteren Siebloch 6 ein Vorsprung aus, der eine Schnittkante 86 bildet. Bei einer solchen Ausgestaltung können klebrige Siebgüter besser durch die Sieböffnung 8 fallen, weil sie nicht so leicht an den Lochwänden anhaften und bei einem Reinigungshub leichter abfallen.

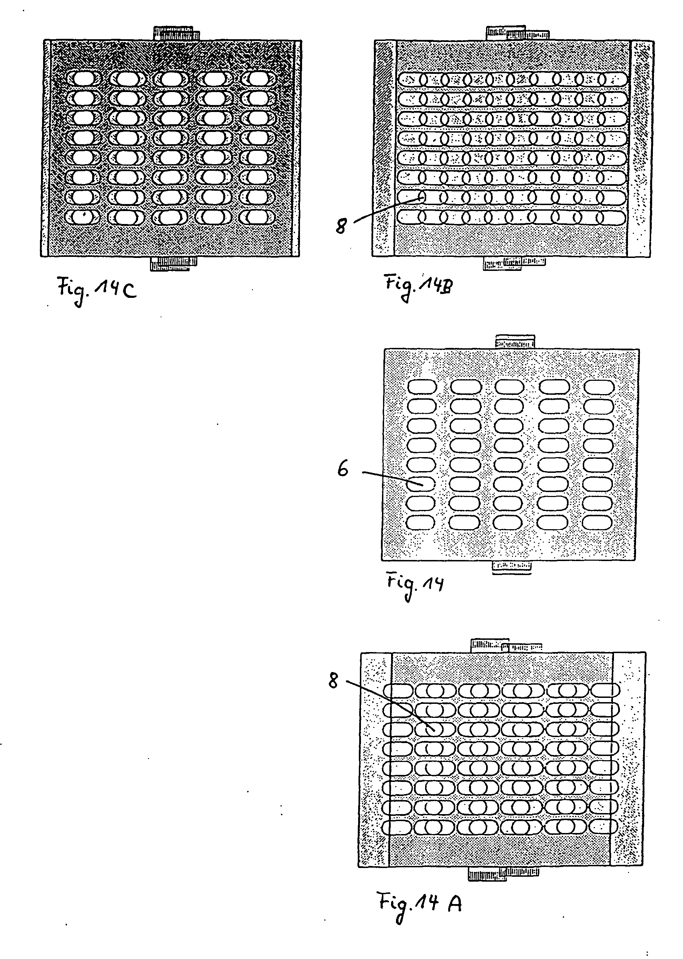

In den Figuren 14 sind verschiedene Lochbilder von Siebelementen 4 dargestellt, die Langlöcher aufweisen. Jedes Siebelement 4 weist Sieblöcher 6 auf, die deckungsgleich ausgebildet sind. Übereinanderliegende Sieblöcher 6 der aufeinanderliegenden Siebelemente 4 bilden jeweils eine oder mehrere Sieböffnungen 8 aus. Die gemeinsam ausgebildeten Sieböffnungen 8 stellen jeweils einzelne und durch Stege zumindest eines Siebelementes 4 voneinander getrennte Öffnungen im Sieb dar, durch die Siebgut hindurchfallen kann. Während ein Siebloch 6 durch Teile eines anderen Siebelements 4 ganz oder teilweise verdeckt sein kann, ist mit dem Begriff Sieböffnung eine solche Öffnung gemeint, durch die Siebgut durch alle Ebenen von Siebelementen 4 frei hindurch fallen kann. Verändert man die relative Lage der aufeinanderliegenden Siebelemente 4 zueinander, verändert sich die Form und Größe der gemeinsamen Sieböffnungen 8. In Fig. 13A ergeben sich im Verhältnis zu den Sieblöchern 6 stark verkleinerte Sieböffnungen 8, die eine kreisrunde Geometrie zeigen. In der in Fig. 14C gezeigten relativen Lage der Siebelemente 4 sind die Löcher größer als in Fig. 14A, in Fig. 14B sind die Sieböffnungen 8 am kleinsten.

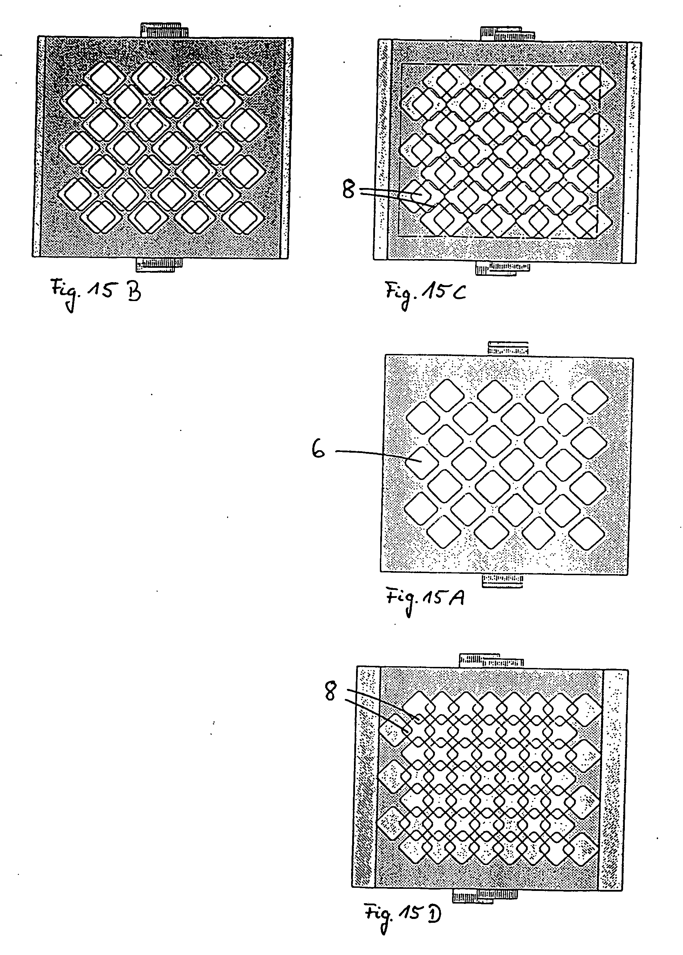

In den Figuren 15 sind Siebelemente 4 gezeigt, die Sieblöcher 6 in Rautenform aufweisen. Die Figur 15A zeigt bei deckungsgleicher Lage der Sieblöcher 6 die größtmögliche Sieböffnung 8, während in Figur 15B die gemeinsame Sieböffnung 8 schon verkleinert ist. In Figur 15C ist die Sieböffnung nochmals verkleinert, wobei ein Siebloch 6 eines Siebelementes 4 zusätzlich zu der rautenförmigen verkleinerten Sieböffnung 8 weitere zwei gemeinsame Sieböffnungen ausbildet, die aus zwei schmalen Schlitzen bestehen. Ein Siebloch 6 bildet also mit drei anderen Sieblöchern 6 des anderen Siebelementes 4 drei gemeinsame Sieböffnungen 8 aus. In Fig. 15D ist eine Stellung der Siebelemente 4 relativ zueinander gezeigt, in der ein Siebloch 6 eines Siebelementes 4 mit vier anderen Sieblöchern 6 des anderen Siebelementes 4 vier gemeinsame Sieböffnungen 8 ausbildet. Die unterschiedlichen Lochzahlen ergeben sich aus der seitlich versetzt zueinander angeordneten Lage der Löcher im Hinblick auf den Verschiebeweg eines oder mehrerer Siebelemente 4 relativ zueinander.

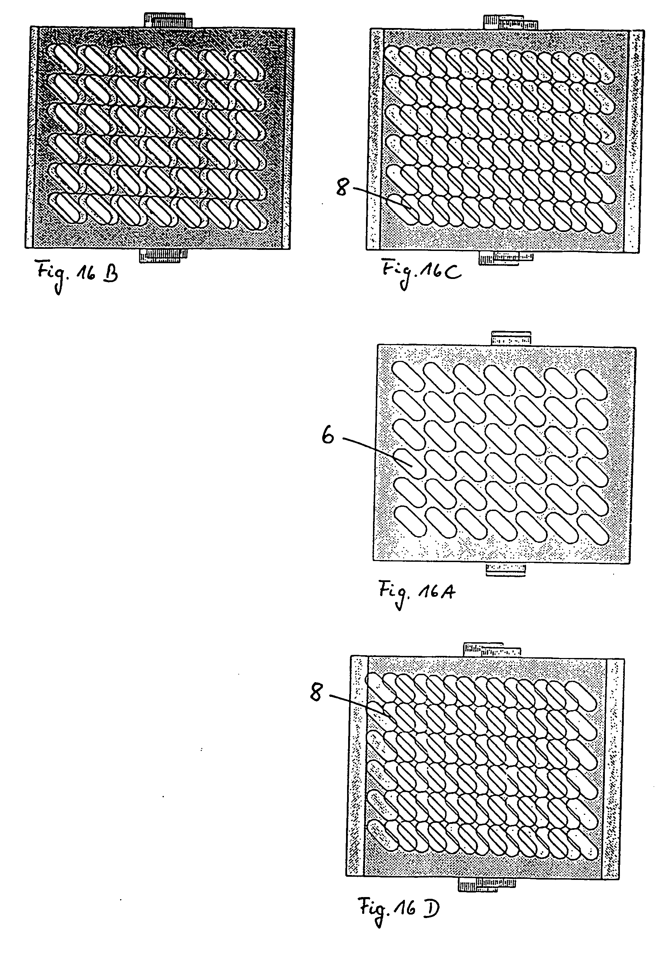

In Fig. 16 sind Siebelemente 4 mit diagonal angestellt angeordneten Langlöchern 6 gezeigt. Während die Fig. 16A wieder die größtmögliche offene Fläche der Sieböffnungen 8 zeigt, verkleinert sich die Fläche der gemeinsamen Sieböffnungen 8 zunehmend über die Figuren 16 B, 16 C zu 16 D. In Fig. 16D sind die eingestellten Sieböffnungen 8 unterschiedlich groß, wobei ein Siebloch wieder mit zwei anderen Sieblöchern des anderen Siebelementes 4 zwei gemeinsame Sieböffnungen 8 ausbildet.

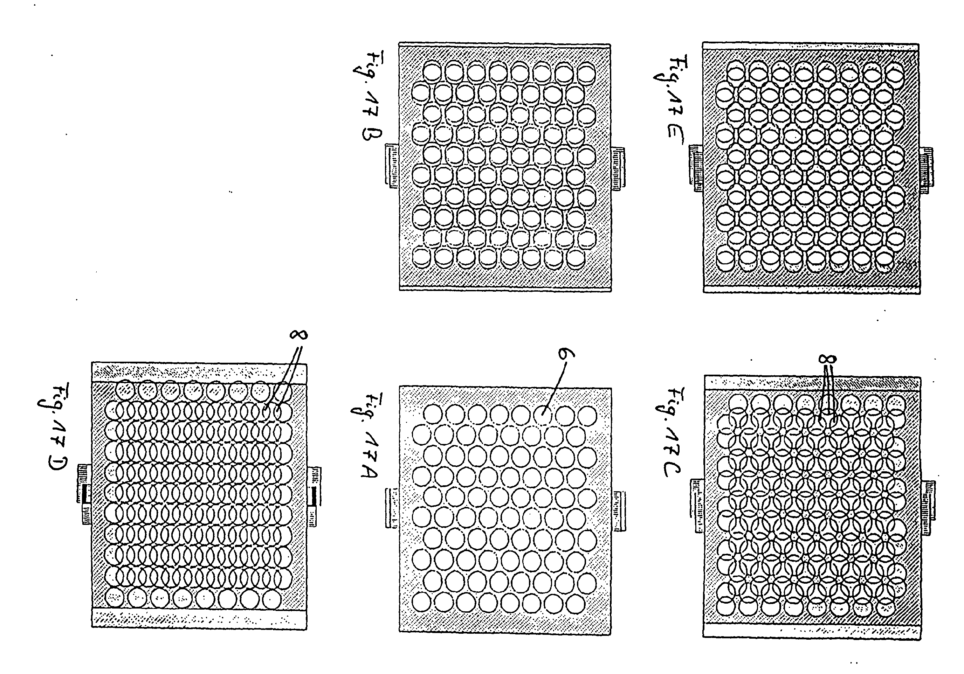

In den Figuren 17 weisen die Siebelemente 4 kreisrunde Sieblöcher 6 auf. Da die Sieblöcher 6 versetzt zueinander in den Siebelementen 4 angeordnet sind, ergeben sich bei ausreichender Verstellung wieder mehrere gemeinsame Sieböffnungen 8 in einem Siebloch 6, wie in den Figuren 17 C bis 17 E gezeigt. Während in Figur 17C jedes Siebloch 6 drei gemeinsame Sieböffnungen 8 aufweist, ergeben sich bei einer Verstellung zur Figur 17D nur zwei gemeinsame Sieböffnungen, während in der Verstellsituation, die in Fig. 17E gezeigt ist, wieder drei gemeinsame Sieböffnungen 8 auftreten.

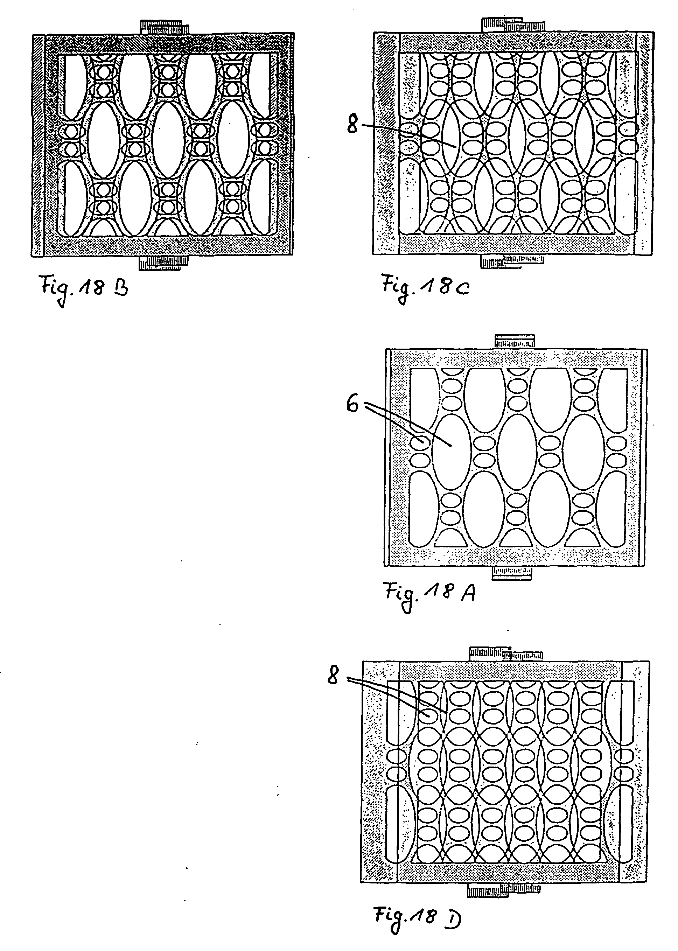

Bei den in den Figuren 18 gezeigten elliptischen Sieblöchern 6 kann Erntegut mit unterschiedlichen Partikelgrößen ausgesiebt werden. Eine entsprechende Aussiebung ist beispielsweise bei Corn-Cob-Mix-Erntegut erwünscht. Und zwar sollen neben dem Körnermais auch in einem vorwählbaren Umfang Spindelteile der Maiskolben mit in den Korntank wandern, da diese Spindelanteile als Futter gut verwertbar sind. Während der Körnermais durch die kleineren Sieblöcher 6 fallen kann, können die größeren Spindeln durch die größeren Sieblöcher 6 fallen. Sollen die Spindelanteile verringert werden, kann das Lochbild so verstellt werden, daß es den in Figur 18B dargestellten Zustand zeigt. Sind nur noch ganz geringe Spindelanteile gewünscht, kann die in Fig. 18C dargestellte Lochgröße eingestellt werden. Wird schließlich das in Fig. 18D dargestellte Lochbild eingestellt, fallen nur noch die Maiskörner durch die Siebbaugruppe 24 hindurch, die Spindelanteile können durch die verkleinerten Lochgrößen nicht mehr hindurchfallen. Somit ist es nicht mehr erforderlich, unterschiedliche Siebe einzubauen, wenn die Maschine von Körnermais auf Corn-Cob-Mix umgestellt wird. Wegen der geringeren Umrüstungszeiten steigt dadurch die effektive Nutzungszeit der Maschine und damit die Schlagkraft deutlich an.

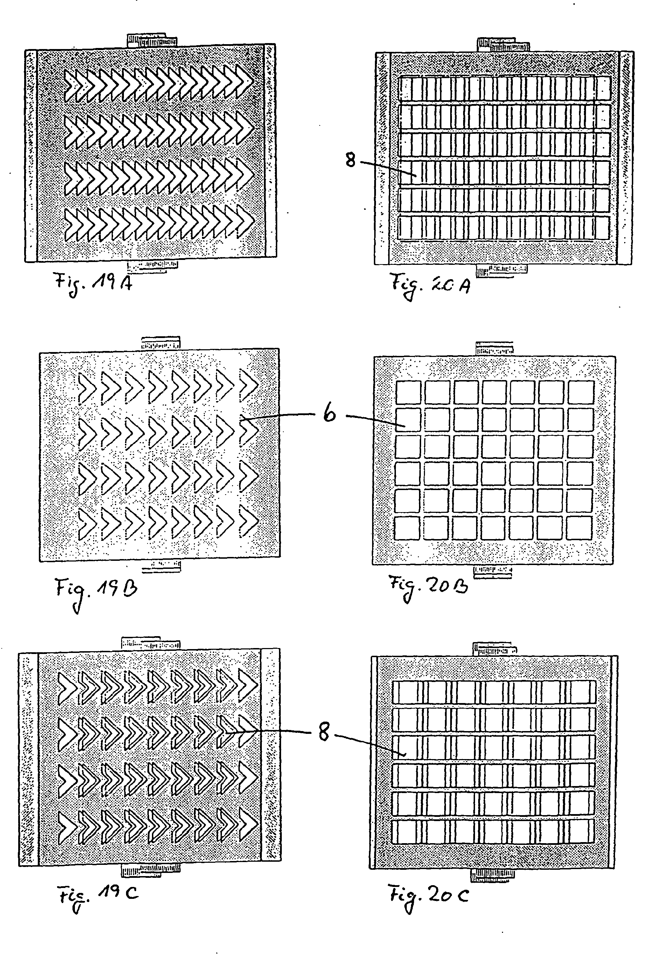

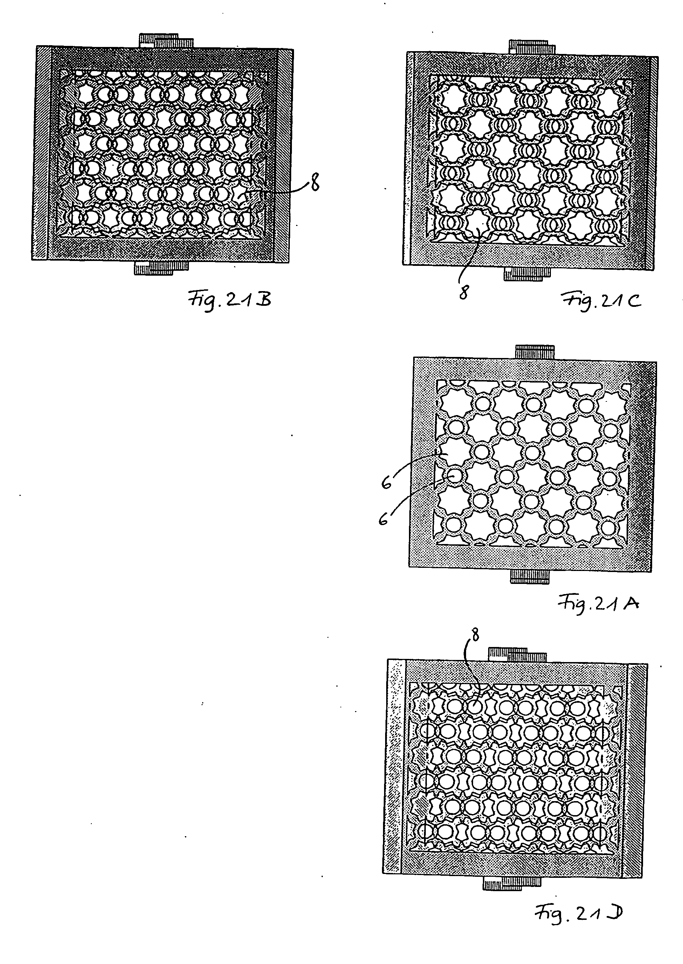

Die Figuren 19, 20 und 21 zeigen unterschiedliche Lochbilder mit quadratischer, dreieckiger oder einer Kombination vieleckiger und runder Ausbildung der Sieblöcher 6.

In den Lochbildern der Figuren 14 bis 21 sind beispielhaft unterschiedliche Lochformen und -größen gezeigt. Die Varianz der Lochgrößen und -formen kann nochmals gesteigert werden, wenn die Siebelemente 4 nicht nur in einer Richtung verstellbar ausgebildet sind.

## Patentansprüche

1. Siebvorrichtung (2) mit zumindest zwei Siebelementen (4), die jeweils eine im wesentlichen glatte, von einer Mehrzahl von Sieblöchem (6) durchbrochene Oberfläche (5) aufweisen und mit ihren Oberflächen (5) gegeneinander verschiebbar aufeinander liegen, **dadurch gekennzeichnet, dass** die einander zugewandten Oberflächen (5) der Siebelemente (4) durch zumindest ein Spannelement (22) mit variabel einstellbarem Anpressdruck im wesentlichen spaltfrei aufeinander gepresst gehalten sind, wobei das Spannelement (22) zumindest ein im wesentlichen starres Befestigungselement und einen elastischen Presskörper aufweist.

2. Siebvorrichtung nach Anspruch 1, **dadurch gekennzeichnet, dass** der Presskörper eine Feder oder elastischer Puffer (48) ist.

3. Siebvorrichtung nach einem der vorhergehenden Ansprüche, **dadurch gekennzeichnet, dass** das Spannelement (22) über ein Andruckelement (17) zur Vergrößerung der Wirkfläche und Verteilung des Anpressdrucks auf die Siebelemente (14) einwirkt.

4. Siebvorrichtung nach Anspruch 3, **dadurch gekennzeichnet, dass** das Andruckelement (17) von mehreren Spannelementen (22) druckbeaufschlagt ist.

5. Siebvorrichtung nach einem der vorhergehenden Ansprüche, **dadurch gekennzeichnet, dass** das Spannelement (22) sich durch eine Ausnehmung zumindest eines Siebelements (4) hindurch erstreckt, deren Größe eine Verschiebung der Siebelemente (4) gegeneinander zulassend ausgelegt ist.

6. Siebvorrichtung nach einem der vorhergehenden Ansprüche, **dadurch gekennzeichnet, dass** zumindest ein Siebelement (4) gewölbt ausgebildet und ein weiteres über dieses herübergespannt ist.

7. Siebvorrichtung nach einem der vorhergehenden Ansprüche, **dadurch gekennzeichnet, dass** zumindest ein Siebelement (4) gewölbt ausgebildet und von dem Spannelement (22) entgegen seiner Wölbung auf ein weiteres Siebelement (4) gepresst gehalten ist.

8. Siebvorrichtung nach einem der vorhergehenden Ansprüche, **dadurch gekennzeichnet, dass** die Übergänge von den Sieblöchern (6) zu den einander zugewandten Oberflächen (5) der Siebelemente (4) scharfkantig sind.

9. Siebvorrichtung nach einem der vorhergehenden Ansprüche, **dadurch gekennzeichnet, dass** die Sieblöcher (6) Lochwandungen ausbilden, die sich im wesentlichen senkrecht zur Oberfläche (5) des Siebelements (4) erstrecken.

10. Siebvorrichtung nach einem der vorhergehenden Ansprüche, **dadurch gekennzeichnet, dass** die Siebelemente (4) ein Sieblochbild zeigen, durch das in einer Lage der Siebelemente (4) übereinander liegende Sieblöcher (6) eine gemeinsame Sieböffnung (8) bilden und dasselbe Siebloch (6) eines Siebelements (4) bei einer anderen relativen Lage der Siebelemente (4) zueinander mit mehreren Sieblöchem (6) des anderen Siebelements (4) mehrere getrennte Sieböffnungen (8) bildet.

11. Siebvorrichtung nach einem der vorhergehenden Ansprüche, **dadurch gekennzeichnet, dass** das Spannelement (22) mit einer Verstelleinrichtung (10) für die Verschiebebewegung der Siebelemente (4) derart gekoppelt ist, dass eine Verschiebung der Siebelemente (4) gegeneinander bei zumindest teilweiser Entspannung des Spannelements (22) erfolgt.

12. Siebvorrichtung nach einem der vorhergehenden Ansprüche, **gekennzeichnet durch** eine Sensorik, die die Verschiebung der Siebelemente (4) gegeneinander in Abhängigkeit von am gesiebten und/oder zu siebenden Gut gemessenen Werten steuert.

## Claims

1. A sieve device (2) with at least two sieve elements (4), which each comprise an essentially flat surface (5) perforated by a plurality of sieve holes (6) and lie one upon the other with their surfaces (5) displaceable against one another, **characterised in that** the mutually facing surfaces (5) of the sieve elements (4) are held pressed one upon the other essentially gap-free by at least one clamping element (22) with a variably adjustable contact pressure, the clamping element (22) comprising at least one essentially rigid fastening element and an elastic pressing body.

2. The sieve device according to claim 1, **characterised in that** the pressing body is a spring or elastic buffer (48).

3. The sieve device according to any one of the preceding claims, **characterised in that** the clamping element (22) acts via a contact-pressure element (17) for enlarging the active area and distributing the contact pressure on the sieve elements (14).

4. The sieve device according to claim 3, **characterised in that** the contact-pressure element (17) is subjected to pressure by a plurality of clamping elements (22).

5. The sieve device according to any one of the preceding claims, **characterised in that** the clamping element (22) extends through a cutout of at least one sieve element (4), the size whereof is designed so as to permit a displacement of the sieve elements (4) against one another.

6. The sieve device according to any one of the preceding claims, **characterised in that** at least one sieve element (4) is formed arched and a further one is braced over the latter.

7. The sieve device according to any one of the preceding claims, **characterised in that** at least one sieve element (4) is formed arched and is held pressed by the clamping element (22) against its arching on a further sieve element (4).

8. The sieve element according to any one of the preceding claims, **characterised in that** the transitions from the sieve holes (6) to the mutually facing surfaces (5) of the sieve elements (4) are sharp-edged.

9. The sieve device according to any one of the preceding claims, **characterised in that** the sieve holes (6) form hole walls which extend essentially at right angles to the surface (5) of the sieve element (4).

10. The sieve device according to any one of the preceding claims, **characterised in that** the sieve elements (4) display a sieve hole pattern by which, in one position of the sieve elements (4), sieve holes (6) lying above one another form a common sieve opening (8) and the same sieve hole (6) of a sieve element (4), in another relative position of the sieve elements (4) to one another, forms a plurality of separate sieve openings (8) with a plurality of sieve holes (6) of the other sieve element (4).

11. The sieve device according to any one of the preceding claims, **characterised in that** the clamping element (22) is coupled with an adjustment device (10) for the displacement motion of the sieve elements (4), in such a way that a displacement of the sieve elements (4) against one another takes place with at least partial slackening of the clamping elements (22).

12. The sieve device according to any one of the preceding claims, **characterised by** a sensor which controls the displacement of the sieve elements (4) against one another as a function of values measured on the sieved material and/or material to be sieved.

## Revendications

1. Dispositif de tamisage (2) avec au moins deux éléments de tamisage (4) qui présentent chacun une surface (5) essentiellement lisse, percée par une pluralité de trous de tamisage (6) et reposent l'un sur l'autre avec leurs surfaces (5) de manière à pouvoir coulisser l'un contre l'autre, **caractérisé en ce que** les surfaces (5) tournées l'une vers l'autre des éléments de tamisage (4) sont maintenues pressées l'une sur l'autre essentiellement sans fente avec une pression de serrage réglable de manière variable, l'élément de serrage (22) présentant au moins un élément de fixation essentiellement rigide et un corps de pressage élastique.

2. Dispositif de tamisage selon la revendication 1, **caractérisé en ce que** le corps de pressage est un ressort ou un tampon élastique (48).

3. Dispositif de tamisage selon l'une quelconque des revendications précédentes, **caractérisé en ce que** l'élément de serrage (22) agit sur les éléments de tamisage (14) par le biais d'un élément presseur (17) pour l'agrandissement de la surface active et la répartition de la pression de serrage.

4. Dispositif de tamisage selon la revendication 3, **caractérisé en ce que** l'élément presseur (17) est mis sous pression par plusieurs éléments de serrage (22).

5. Dispositif de tamisage selon l'une quelconque des revendications précédentes, **caractérisé en ce que** l'élément de serrage (22) s'étend au travers d'un évidement au moins d'un élément de tamisage (4), dont la grandeur est conçue de manière à autoriser un coulissement des éléments de tamisage (4) l'un contre l'autre.

6. Dispositif de tamisage selon l'une quelconque des revendications précédentes, **caractérisé en ce qu'**au moins un élément de tamisage (4) est réalisé courbé et un autre recouvert par celui-ci.

7. Dispositif de tamisage selon l'une quelconque des revendications précédentes, **caractérisé en ce qu'**au moins un élément de tamisage (4) est réalisé courbé et est maintenu pressé par l'élément de serrage (22) à l'encontre de sa courbure sur un autre élément de tamisage (4).

8. Dispositif de tamisage selon l'une quelconque des revendications précédentes, **caractérisé en ce que** les passages des trous de tamisage (6) aux surfaces (5) tournées l'une vers l'autre des éléments de tamisage (4) sont à arêtes vives.

9. Dispositif de tamisage selon l'une quelconque des revendications précédentes, **caractérisé en ce que** les trous de tamisage (6) réalisent des parois percées qui s'étendent essentiellement perpendiculairement à la surface (5) de l'élément de tamisage (4).

10. Dispositif de tamisage selon l'une quelconque des revendications précédentes, **caractérisé en ce que** les éléments de tamisage (4) montrent une image de trou de tamisage, par laquelle des trous de tamisage (6) se trouvant les uns au-dessus des autres dans une position des éléments de tamisage (4) forment une ouverture de tamisage (8) commune et le même trou de tamisage (6) d'un élément de tamisage (4) forme plusieurs ouvertures de tamisage (8) séparées pour une autre position relative des éléments de tamisage (4) l'un par rapport à l'autre avec plusieurs trous de tamisage (6) de l'autre élément de tamisage (4).

11. Dispositif de tamisage selon l'une quelconque des revendications précédentes, **caractérisé en ce que** l'élément de serrage (22) est couplé à un dispositif de réglage (10) pour le mouvement coulissant des éléments de tamisage (4) de telle sorte qu'un coulissement des éléments de tamisage (4) l'un contre l'autre soit effectué pour une détente au moins partielle de l'élément de serrage (22).

12. Dispositif de tamisage selon l'une quelconque des revendications précédentes, **caractérisé par** un dispositif de détection qui commande le coulissement des éléments de tamisage (4) l'un contre l'autre en fonction de valeurs mesurées sur le produit tamisé et/ou à tamiser.
